# EUROPEAN PATENT APPLICATION

(11) **EP 3 187 991 A1**
(43) Date of publication of application: **05.07.2017**
(21) Application number: 16002549.0
(22) Date of filing: 30.11.2016
(51) Int. Cl.: G06F 3/048, G06F 3/0482

(54) **METHOD AND SYSTEM FOR INTEGRATED APPLICATION NOTIFICATIONS**

(30) Priority: 28.12.2015 US 201514980564
(71) Applicant: SAP SE, 69190 Walldorf (DE)
(72) Inventor: Ziegler, Marc, 69190 Walldorf (DE); Schon, Jamila, 69190 Walldorf (DE)
(74) Representative: Müller-Boré & Partner Patentanwälte PartG mbB

(57) **Abstract**

A method, system, and computer-readable medium to manage notifications from a plurality of related applications including displaying, by a computing device, a user interface on an output device, the user interface concurrently displaying at least one preview indicator of a notification generated by one or more related applications, each preview indicator being associated with at least one of the plurality of related applications and a user-selectable graphic user interface element to display the one or more notifications; receiving, from a user, a selection of one of the at least one preview indicators of a notification and the user-selectable graphic user interface element to display the one or more notifications; and displaying a detailed view of the notification corresponding to the user selected preview indicator of a notification and the user-selectable graphic user interface element to display the one or more notifications.

## Description

### BACKGROUND

A software application may be designed and configured to provide a message or, more generally, a notification regarding some aspect of the application to an entity. For example, a first application having active monitoring capabilities may be configured to monitor operating parameters of a device and/or an environmental condition in a vicinity of the device and periodically provide messages regarding the monitored device to a user. A second application may be designed and configured to provide a notification to the user when a particular event associated with an operation of the second application occurs. For example, a manger of a business organization may be notified of losses or gains related to sales of a product that exceed a threshold amount. Each of the first and second applications may inform the user of their notifications via one or more delivery channels.

In some aspects, notifications from different applications may be transmitted or communicated to a user or other entity primarily independent of each other. As an example, the first application discussed above may inform a user of its notifications via email, as determined by the application. Also, the second application from above may transmit its notifications to the user via a text message and a voice message to a telephone number. The user may gain access to the notifications by monitoring their email messages, text messages, and voicemail messages via their applicable email, text message, and voicemail service(s) or device(s).

In some contexts, such as a user or other entity interacting with multiple applications, there may exist a desire to manage notifications from the multiple applications in a timely, informed, and efficient manner.

### BRIEF DESCRIPTION OF THE DRAWINGS

FIG. 1 is an illustrative depiction of an operational environment;
FIG. 2 is a schematic diagram of a logical architecture for a system, according to some embodiments;
FIG. 3 is an illustrative depiction of a user interface, according to some embodiments herein;
Fig. 4 is an illustrative depiction of a user interface including a notification area, according to some embodiments;
FIG. 5 is an illustrative depiction of a user interface displayed on a mobile telephone, according to some embodiments; and
FIG. 6 is an illustrative depiction of a user interface displayed on a mobile device including a notification area, in accordance with some embodiments;
FIG. 7 is an illustrative depiction of a user interface including integrated notification elements, in accordance with some embodiments;
FIG. 8 is an illustrative depiction of a user interface including a list view of notifications, in accordance with some embodiments;
FIG. 9 is an illustrative depiction of a user interface including groupings of notifications, in accordance with some embodiments;
FIG. 10 is an illustrative depiction of some aspects of a user interface, in accordance with some embodiments;
FIG. 11 is an illustrative depiction of a user interface including a stacked configuration of notifications, in accordance with some embodiments;
FIG. 12 is an illustrative depiction of a user interface including an expanded view of a stacked notification, in accordance with some embodiments;
FIG. 13 is an illustrative depiction of a user including views on different output devices, in accordance with some embodiments;
FIG. 14 is a logical representation of a notification grouping aspect, in accordance with some embodiments;
FIG. 15 is a flow diagram of a process, in accordance with some embodiments herein;
FIG. 16 is an illustrative depiction of a user interface for configuring notification settings, in accordance with some embodiments;
FIG. 17 is an illustrative depiction of some aspects of a user interface, in accordance with some embodiments herein;
FIG. 18 is an illustrative depiction of some aspects of a user interface, in accordance with some embodiments herein;
FIG. 19 is an illustrative system architecture capable of supporting at least some aspects of the present disclosure;
FIG. 20 is an illustrative depiction of a flow of information, according to some embodiments herein;
FIG. 21 is an illustrative depiction of a flow of information, according to some embodiments herein; and
FIG. 22 is an illustrative schematic block diagram of a computing device capable of supporting some operations of the present disclosure.

### DETAILED DESCRIPTION

The following description is provided to enable any person in the art to make and use the described embodiments. Various modifications, however, will remain readily apparent to those in the art.

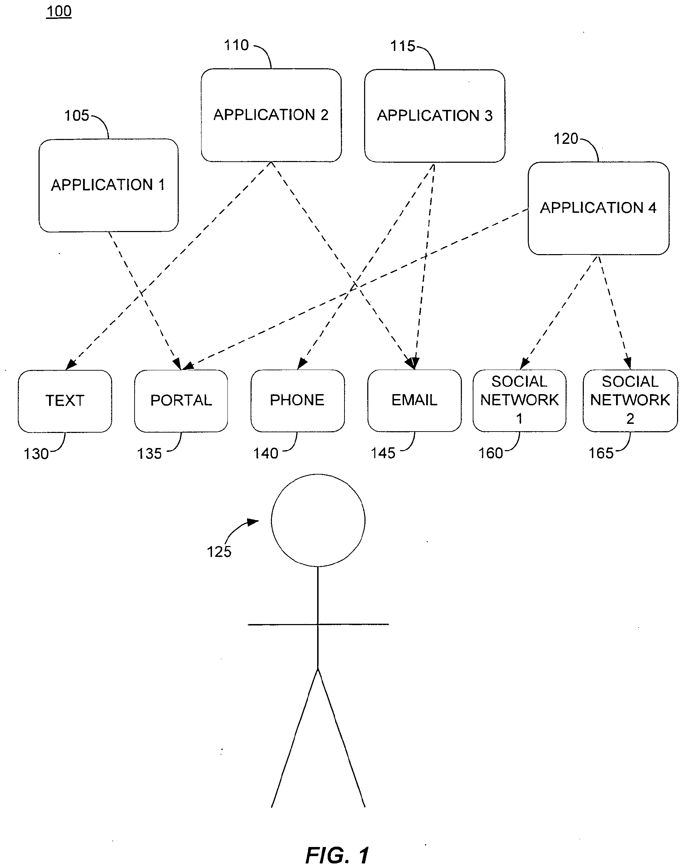

FIG. 1 is an illustrative depiction of an operational environment 100 that may benefit from some of the aspects of the present disclosure. In the context of environment 100, a plurality of software applications or services (i.e., "applications") 105, 110, 115, and 120 operate to provide, for example, a new or improved functionality or service. In some aspects, the particular functionality and/or service provided by the plurality of applications of FIG. 1 may vary and is not limited to a specific application type or technical configuration. A user 125 interacts with the plurality of applications 105, 110, 115, and 120. The user's interaction with the applications may be facilitated by one or more types of computing devices (i.e., devices having a processor), including but not limited to a desktop computer, a mobile telephone, a notebook computer, a smartwatch, and a tablet.

An application may encompass any combination of one or more of, *inter alia*, a web-based artifact, a native artifact, a hybrid artifact, a container-based artifact, etc.

In some aspects, the plurality of applications 105, 110, 115, and 120 may each generate a message or notification. The generated notifications may each include information intended to be communicated to user 125. The information may include, for example, a value for a monitored parameter, an occurrence of a particular or "trigger" event, a violation of a rule, etc. In some aspects, the notifications from the plurality of applications 105, 110, 115, and 120 may be transmitted, sent, or otherwise communicated to user 125 through one or more communication channels. In some aspects, the communication channels may include a text messaging service 130, an enterprise's employee portal 135, a mobile telephone 140, an email service 145, a first social media network 160, and a second social media network 165. User 125 could thus receive notifications from the plurality of applications via a plurality of channels. In some aspects, user 125 cannot specify the communication channel for the reporting or transmission of notifications. Accordingly, in typical fashion heretofore, user 125 would need to monitor each of the communication channels that may be used by the plurality of applications 105, 110, 116, and 120 in communicating notifications to user 125.

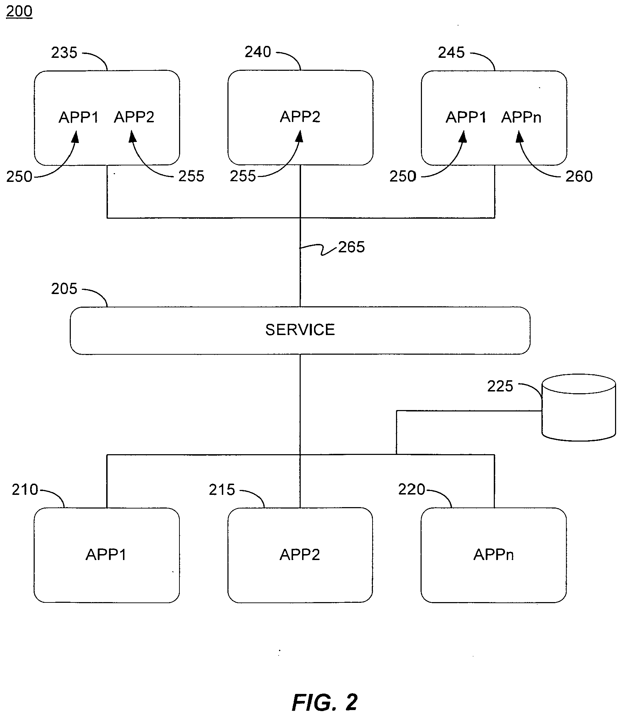

FIG. 2 is a schematic diagram of a logical architecture for a system 200, according to some embodiments herein. System 200 includes, in the illustrated example, a service (e.g., a cloud-based or web service) 205 that may provide one or more functionalities to an entity (i.e., user). In some aspects, functionalities delivered by service 205 may include, for example, customer relationship manager (CRM), enterprise resource planning (ERP), supplier relationship management (SRM), and other types of products. Such services may be supported on a back-end by application components 210, 215, and 220 that include hardware and software modules and access to data store(s) 225 (e.g., storage disks). Service 205 may be supported on a front-end by application components 250, 255, and 260 deployed to users 235, 240, and 245. In the example of FIG. 2, user 235 is running a version of applications 250 and 255 corresponding to back-end components 210 and 215, respectively; user 240 is running a version of application 255 corresponding to back-end component 215; and user 240 is running a version of applications 250 and 260 corresponding to back-end components 210 and 220, respectively. Communication between service 205 and the users 235, 240, and 245 is accomplished over communication link 265 that may include multiple channels of communication (e.g., internet, email, text, etc.).

In some aspects, users 235, 240, and 245 may each run different applications, including more than one application as provided by the vendor, supplier, or servicer of service 205. The applications may support a business function or role of the users. In some aspects, an application associated with service 205 may provide notifications to a user running and/or interacting with the application(s) depending, for example on the user's role. In some aspects, the user may need or at least desire to be informed of certain types of information related to the applications they are using and/or interacting with. In response to these and other aspects, the present disclosure provides a method, system, and other mechanisms for providing notifications from one or more applications to a user in a unified manner that is efficient and consistent across multiple communication channels and devices.

In some embodiments, the applications of FIG. 2 may be a set of related applications deployed by a common vendor in accordance with a specific interoperability framework. Some aspects of the present disclosure provide mechanisms for a user to receive notifications from anywhere within the framework (i.e., any of the related applications). In some embodiments, the user need not be in a particular application in order to receive notifications related to that particular application.

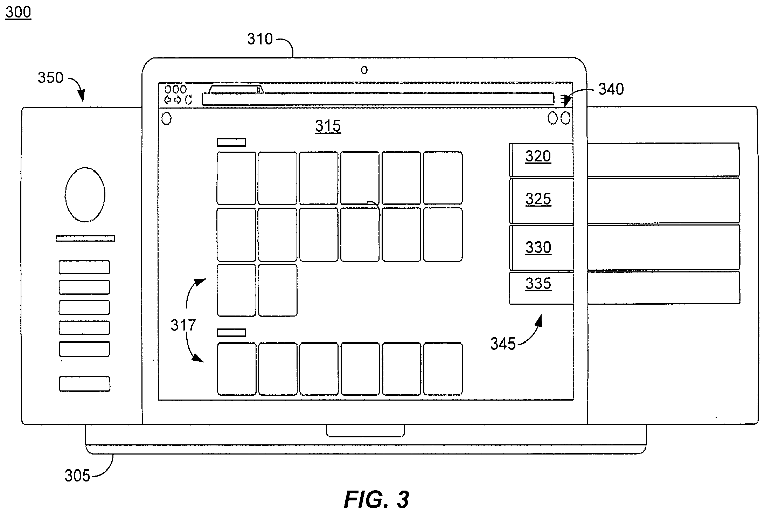

FIG. 3 is an illustrative example of a system 300 including a user interface, in accordance with some embodiments herein. Such a user interface may, among other things, employ elements of the SAP® Fiori User Experience (UX). SAP® Fiori is a new UX for SAP software, applying modern design principles for a completely reimagined user experience that among other things delivers a personalized, responsive, seamless, and simple user experience across applications (including legacy and new), devices (including, *inter alia,* desktop computer, notebook computer, laptop computer, tablet, smartphone, smartwatch, etc.), and deployment options (such as for example on-premise, cloud, as-a-service, etc.).

FIG. 3 shows a computing device 305 having an output device comprising a display screen 310. Computing device 305 is, in the example of FIG. 3 a laptop computer. In some embodiments, aspects and characteristics of a laptop computer and a desktop computer regarding the user interface components disclosed herein are similar. This may be the case since laptop computers and desktop computers may have similar operating capabilities and specifications. In other embodiments, aspects and characteristics of a target device (such as for example a smartphone or a smartwatch) regarding the user interface components disclosed herein may be different. Display screen 310 displays a user interface 315. User interface 315 includes a plurality of graphical user interface tiles 317. Tiles 317 may be representations of applications, contacts, and other types of data, products, and content associated with or relevant to a user. In some embodiments, user interface 315 may be referred to as a "launchpad" that provides a centralized location for a user to access the various applications, services (e.g., social networks), and products that they run, subscribe to, and otherwise interact with.

In addition to tiles 317, user interface ("UI") 315 includes a number of preview indicators of notification at 320, 325, 330, and 335. The preview indicators are, in the example of FIG. 3, located along a right side of the UI 315 in a preview area 345. The preview indicators provide a visual indication of four (4) notifications related to application(s) associated with a user of computing device 305. As shown in FIG.1, the preview indicators 30, 325, 330, and 335 display only a portion of the notifications on display 310, as configured in FIG. 1. A portion of the notifications corresponding to preview indicators 320, 325, 330, and 335 is not visible in the viewable portion of UI 315, as shown by notification area 345 located out-of-view of display 310. Likewise, a settings area 350 is also shown located out-of-view of display 310 at a left peripheral portion of display 310. UI 315 further includes a graphical user interface element 340 for selectively opening notification area 345.

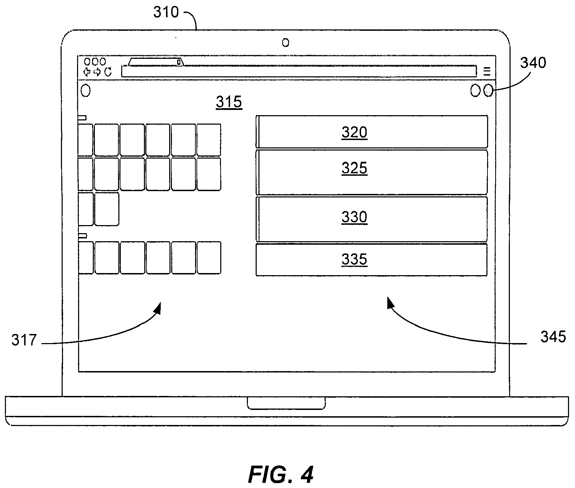

FIG. 4 is an illustrative depiction of UI 315 in response to a user selecting or actuating graphical user interface element 340 to open notification area 345. In the present example, notification area 345 is opened by shifting a viewport of the UI 315 to the right, resulting in the notification area 345 being fully displayed in UI 315. This shifting of the viewport of the UI is manifested as an animation of the UI moving towards the left side of the display. FIG. 4 shows the graphical user interface element 340 as being activated (i.e., highlighted).

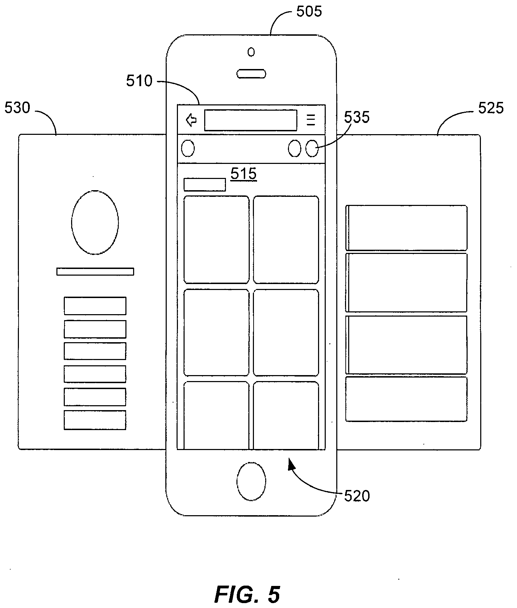

FIG. 5 is an illustrative example of some aspects herein, including an embodiment of a UI 515 displayed on an output device comprising a mobile telephone (e.g., a smartphone). In accordance with some aspects herein, user interface design concepts for the user interfaces of the present disclosure are consistent across different devices. That is, the user interfaces herein may be referred to as "device agnostic". Accordingly, mobile telephone 505 has an output device comprising a touchscreen 510 that is displaying UI 515 in FIG. 5. UI 515 includes a notification area 525, similar to the notification area 345 of FIG. 3. However, given the reduced screen real estate of mobile telephone 505 as compared to computing device 305 of FIG. 3, the notification area 525 may be located totally out-of-view of the display screen 510 while UI 515 displays tiles 520. UI 515 may have a graphical user interface element 535 for opening the notification area 525. UI 515 further includes a settings area 530. Similar to notification area 525, settings area 530 is located totally out-of-view of the display screen 510 while UI 515 displays tiles 520.

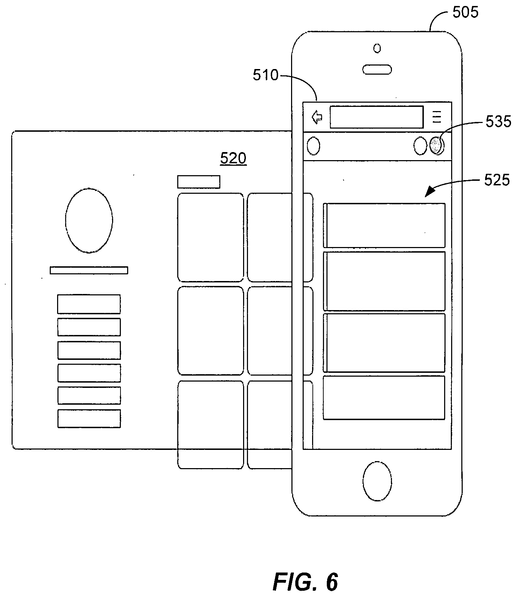

FIG. 6 is an illustrative depiction of UI 520 displayed on mobile telephone 505 after a selection of graphical user interface element 535 for opening the notification area 525. In response to the selection of graphical user interface element 535, UI 520 effectively moves towards the left edge of the display, providing a full view of notification area 525 in the viewable area of display 510.

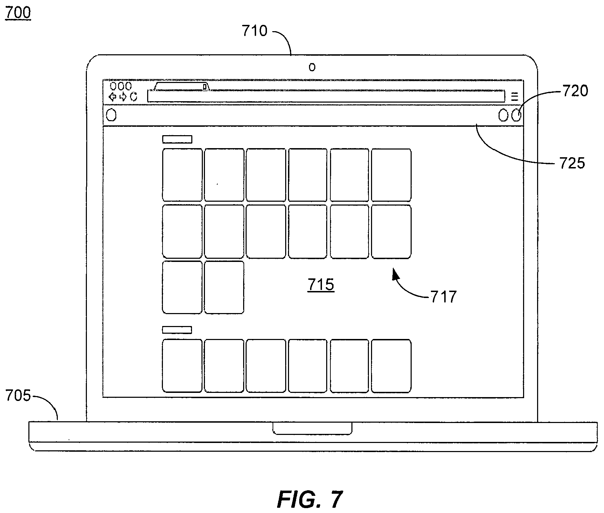

FIG. 7 is an illustrative depiction of a user interface in accordance with some embodiments herein. In particular, system 700 includes a computing device 705 having an output device comprising a display 710. In some aspects, computing device 705 executes an operating system ("OS"), as is known. A user interface 715 containing a number of tiles 717 is shown displayed in a viewable portion of display 710. UI 715 includes a graphical user interface element 720 for opening a notification area (not shown in FIG. 7). The graphical user interface element 720 for opening the notification area is configured in a shell bar 725. Shell bar 725 may, in some embodiments such as the one illustrated in FIG. 7, be integrated into the user interface layer (i.e., "shell") of the OS running on computing device 705. Accordingly, shell bar 725 may always be visible or displayed in the display of the computing device running an OS having aspects of the user interfaces disclosed herein integrated into the shell of the OS.

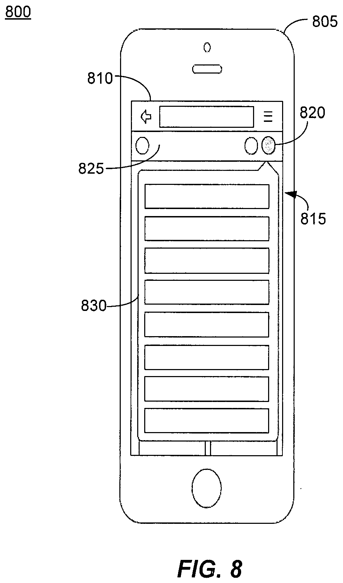

In some embodiments, an OS of a mobile telephone (and other computing devices) may have aspects of the user interfaces disclosed herein integrated into the shell of the OS for the mobile telephone (and other computing devices). FIG. 8 is an illustrative depiction of a mobile telephone having some aspects of the user interfaces disclosed herein integrated into the shell of the telephone's OS. System 800 including mobile telephone 805 having a display screen 810 displays a UI 815. UI 815 further includes a graphical user interface element 820 for opening a notification area (not shown in FIG. 8). The graphical user interface element 820 for opening a notification area is configured in a shell bar 825. In the example of FIG. 8, graphical user interface element 820 for opening a notification is shown selected and in response thereto a list view 830 visualization including a listing of notifications for the user is displayed.

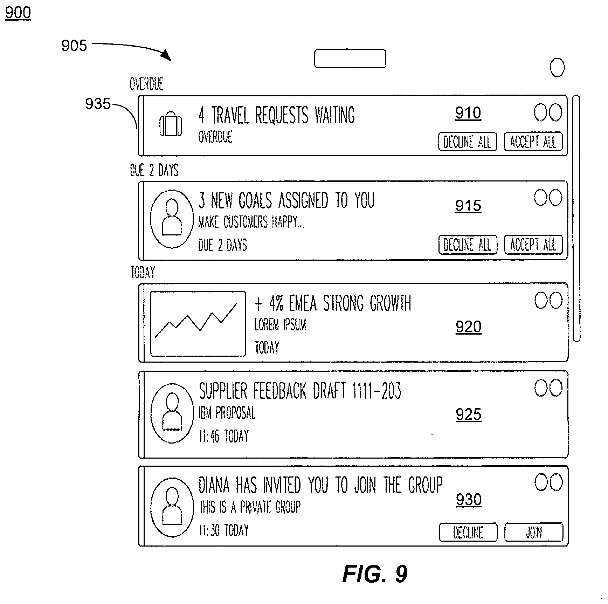

FIG. 9 is an illustrative depiction of some aspects of a UI, in accordance with some embodiments herein. FIG. 9 includes a UI 900 comprising a list view of notifications targeted to a user on their computing device. The list view may be generated in the UI in response to a user selectively invoking an opening of a notification. The user may invoke the opening of a notification by opening a notification area and/or directly selecting one or more notifications in a UI. UI 905 is displaying 5 notifications in a list (i.e., 910, 915, 920, 925, and 930). Notifications are added to the list based on internal events within applications or systems. In some aspects herein, the notifications can display different types of notifications that may differ in appearance, content and functionality.

In some aspects, the list of notifications is ordered by a timestamp associated with each notification. In some embodiments, a most recent notification is displayed first, with subsequent notifications appearing in the list in descending time order. In some embodiments, the listing of notifications may be ordered based on a priority assigned to the notifications, with higher priority notifications appearing higher in the listing. In some aspects, a priority of a notification may be indicated by a color coding of a portion 935 of the listed notifications.

In some aspects herein, multiple notifications may be logically grouped together and visually presented as a single notification. In some aspects, the grouping may be based on one or more factors of a grouping scheme. The grouping scheme may consider, for example, a source of a notification (i.e., which application or service generated the notification) and a type of notification. In this manner, notifications generated by a same source (e.g., application) may be grouped together and notifications of a particular type may also be grouped together. In the example of FIG. 9, four (4) travel requests type of notifications are grouped and stacked together and displayed as a single notification 910, and three (3) goal notifications are grouped and stacked together as a single notification 915. It is noted that the visualization of the stacked notifications includes the detailed information regarding the types of notifications included in the stacked notification (e.g., travel requests, new goals, etc.). The stacked configuration of the notifications may facilitate presenting an "uncluttered" viewing of all of the notifications.

The list view of notifications in FIG. 9 further illustrates that notifications herein may include a user-selectable graphic user interface element to invoke an action. For example, stacked notifications 910 and 915 each include user-selectable graphic user interface elements to decline all or accept all of the travel requests and newly assigned goals, respectively. In accordance with some embodiments, a user may invoke the particular actions directly from the notifications without a need to navigate to or open the application, service, or product that generated the notification. In this manner, a user may invoke actions "in-place" without opening an underlying application, service, or product or even navigating away from the notification in which the user-selectable graphic user interface element is contained.

As shown in FIG. 9, individual notifications such as notification 930, may also have a user-selectable graphic user interface element to invoke the particular actions directly from the notification without a need to navigate to or open the application, service, or product that generated the notification. For example, a user can decline or accept the invitation to join a group as presented in notification 930.

A user may navigate to or open a relevant application or source of a notification by selecting a notification (e.g., tap/click or other UI selection mechanism). Other features of some notifications herein include the notifications including sufficient contextual content to inform a user of the nature of the notification, thereby minimizing a need for a user to navigate to an underlying application or notification source just to determine the relevancy of the notification. For example, the notifications may include icons representative of the type of notification (e.g., travel requests, assigned goals, key performance indicators such as the graph and detailed content of notification 920), photos or avatars representing people (see notifications 925 and 930), and other detailed content.

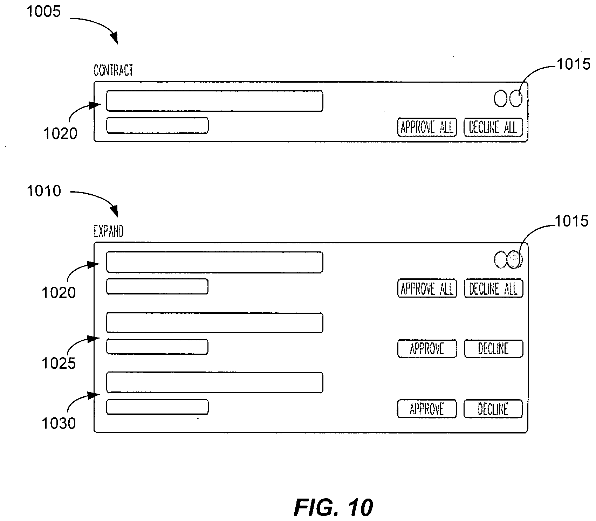

FIG. 10 is an illustrative depiction of some aspects of a UI herein. Notification 1005 is an embodiment of a list view visualization of multiple notifications in a contracted configuration and 1010 is an embodiment of the list view visualization of the same notifications configured in an expanded view thereof. The contracted configuration represents all of the notification as a single notification 1020. Notification 1005 includes a user-selectable graphic user interface element 1015 to expand the list view. In response to a selection of the graphic user interface element 1015, the list view is expanded as shown at 1010 to display the individual notifications 1020, 1025, and 1030. In some embodiments, the expanded list view may retain a presentation of the stacked notification at 1020 in addition to the individual notifications 1025 and 1030 so that, for example, a user can optionally invoke an action for all of the notifications as opposed to being limited to acting on individual notifications once the list view is expanded.

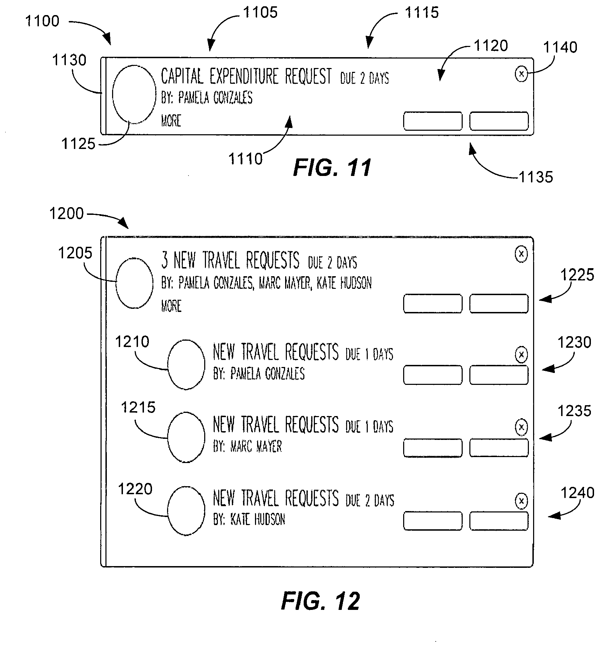

FIG. 11 is an illustrative representation of a notification 1100, in accordance with some aspects herein. In some embodiments, notification 1100 may be opened or accessed from a list view presentation of one or more notifications or from a "launchpad" as discussed with respect to FIG. 3. Notification 1100 may include a number of attributes. In some embodiments, some of the attributes shown in FIG. 1100 are considered mandatory while other attributes of the notification are not necessarily included in each instance of the notification. Non-mandatory content may be included in a notification if the source of the notification provides the content, otherwise the non-mandatory content will not be included and the notification can still be generated. In some instances, a notification lacking the requisite attributes will not, at least, be presented in a UI for consumption by a user. In some instances, a non-conforming notification may result in an error message or some other indication less or other than a notification.

Notification 1100 includes the mandatory attributes of a title 1105, a body of content 1110 (e.g., text message, email, etc.); a timestamp signaling the age of the notification, an expiration, etc.; and a status of the notification (e.g., read, unread, expired, etc.) 1120. The status of notification 1100 is "unread" as indicated by a lack of shading in the interior of the notification.

Other attributes of notification 1100 may include a photo, icon, avatar, chart, or graph 1125 that may quickly and intuitively inform a user of the relevant person, source, or metric that the notification relates to. As mentioned above, a priority indicator 1130 may indicate a relative priority or ranking of the notification, or a lack of such a ranking as indicated by the absence of any priority coding (coloring, shading, and other visualizations). Notification 1100 further includes actionable graphic user interface elements 1135 that can be selected to invoke an action to be accomplished by an application or service associated with the notification (e.g., the application or service that generated the notification). In some aspects, an operation attribute 1140 may also be included in the notification. The operation attribute may relate to performing an action of the notification itself, such as, for example opening, resizing, dismissing, or closing the notification.

FIG. 12 is an illustrative representation of a notification 1200, in accordance with some aspects herein. In some embodiments, notification 1200 may be provided in a list view display or presentation of notifications in a UI, in accordance with other aspects herein. In particular, notification 1200 may be a representation of an expanded configuration of a stacked notification that includes a combined or aggregated summary 1205 of the three stacked notifications and the listing of the three individual notifications 1210, 1215, and 1220 and their specific attribute values. The attributes of the combined notification 1205 and the individual notifications may be similar to the attributes discussed above regarding notification 1100 in FIG. 11. Accordingly, an understanding of the attributes shown in FIG. 12 may be readily had by referring to FIG. 11 and the discussion of same above. Notification 1200 further includes a bulk actionable graphic user interface elements 1225 that can be selected to invoke an action for all of the notifications 1210, 1215, and 1220. The individual listings of the notifications 1210, 1215, and 1220 each include actionable graphic user interface elements 1230, 1235, and 1240, respectively, that can be selected to individually invoke an action for each of the respective notifications.

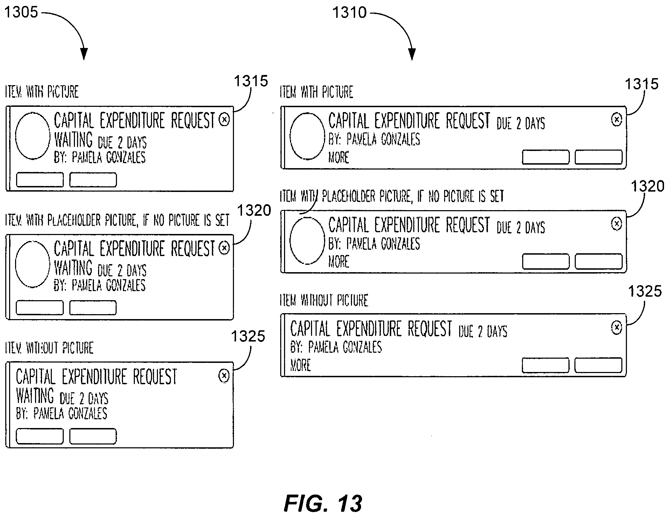

FIG. 13 is an illustrative depiction of user interface, in accordance with some embodiments herein. In particular, UI 1305 is an example of a display of three notifications 1315, 1320, and 1325 as embodied on a mobile telephone (e.g., smartphone) or other device having a similarly sized display screen. UI 1310 of FIG. 13 is an example of a display of the same three notifications 1315, 1320, and 1325 as embodied on a computing device having a relatively larger sized display screen (e.g., desktop computer interfaced with an external monitor, a laptop computer, a tablet, etc.), as compared to the mobile telephone displaying the UI 1305 embodiment. As shown, some embodiments operate herein to resize the UI and the elements thereof to accommodate different screen sizes without a loss of content or deviating in appearance. In this manner, some embodiments herein may function to maintain a consistency in the type and amount of content included in notifications, as well as a substantial uniformity regarding the look/visualizations of notifications across different devices. In some instances, the resizing of the UI and the elements therein may be accomplished automatically by systems, devices, and other implementations of the processes disclosed herein.

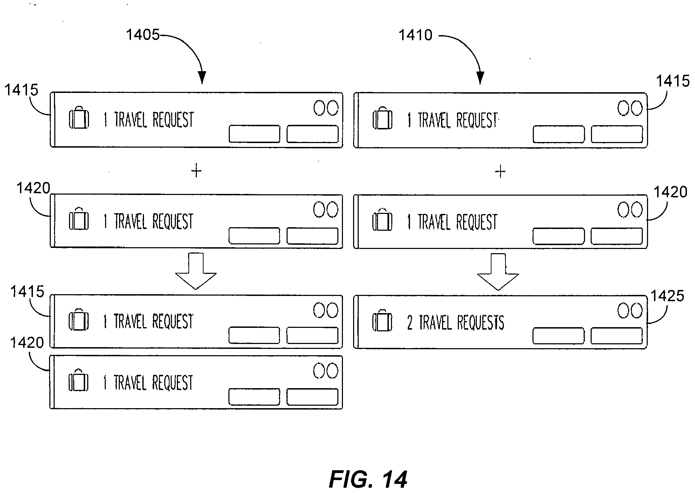

FIG. 14 is an illustrative depiction of some aspects of a user interface, in accordance with some embodiments herein. In the example of FIG. 14, a logical organization of notifications subject to a notification stacking operation is shown at 1405 and a logical organization of the notifications not subject to a notification stacking operation is shown at 1410. As shown, notifications 1415 and 1420 may be logically grouped, added, or aggregated since, for example, they are of a same type (i.e., travel requests). However, the system implementing the embodiment of FIG. 14 at 1405 is not designed and/or configured to allow such aggregating of like notifications. As a result, a UI including a listing of the notifications 1415 and 1420 shows the notifications as separate, individual notifications at 1425. It is noted that notifications may be grouped and stacked on a basis other than being a common type of notification.

In another instance of the system implementing the embodiment of FIG. 14, the system is designed and/or configured to allow aggregating or stacking of like notifications (or stacking based on some other criteria). At 1410, notifications 1415 and 1420 may be logically grouped, added, or aggregated since, for example, they are of a same type. Accordingly, a UI including a listing of the notifications 1415 and 1420 at 1410 shows the notifications as a single stacked notification including references to two travel requests.

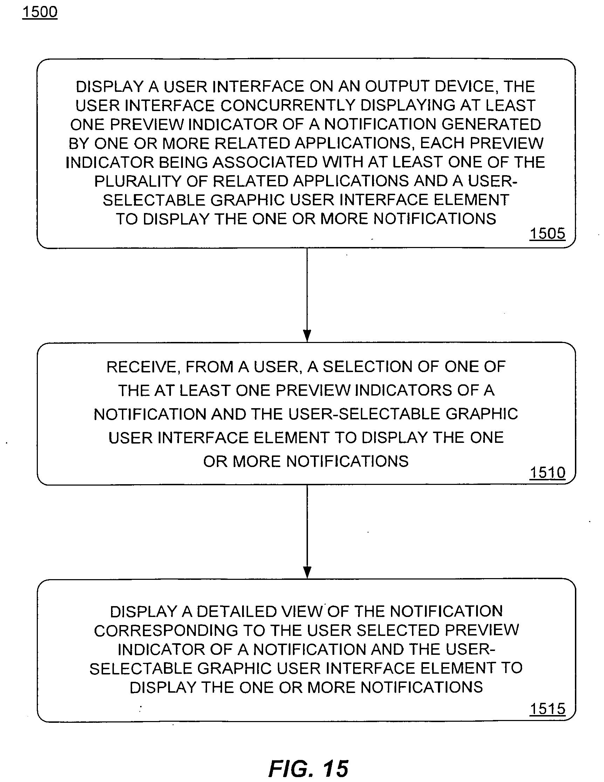

Referring to FIG. 15, a process relating to managing notifications from a plurality of related applications is disclosed. Process 15 may be implemented by a system, application, or apparatus configured to execute the operations of the disclosed process. In general, flow diagram 1500 relates to a process to efficiently manage the provisioning of notifications to a user in a consistent and unified manner, notwithstanding a particular device or communication channel the user may be using at a particular time. In some use-cases a user may switch between devices used to receive notifications associated with one or more applications or services and/or the (preferred) communication channel used to receive the notifications, particularly if the user is on the move (i.e., mobile).

In some embodiments, various hardware elements of an apparatus, device or system execute program instructions to perform process 1500. In some embodiments, hard-wired circuitry may be used in place of, or in combination with, program instructions for implementation of processes according to some embodiments. Program instructions that can be executed by a system, device, or apparatus to implement process 1500 (and portions and/or other processes disclosed herein) may be stored on or otherwise embodied as non-transitory, tangible media. Embodiments are therefore not limited to any specific combination of hardware and software.

Prior to operation 1505, applications and services executing on a device or a server-side computing device (e.g., an application server) of a cloud-based or web-based set of applications may be developed and deployed to a user or group of users.

At operation 1505, a user interface is displayed on an output device. The output device may be interfaced or coupled to a computing device. In various embodiments hereof, the computing device may be a computer (e.g., desktop, laptop, thin client, etc.), a mobile device such as a mobile telephone, a multifunctional entertainment device, a computer tablet, etc. The displayed UI may concurrently display at least one preview indicator of a notification generated by one or more related applications, each preview indicator being associated with at least one of the plurality of related applications and a user-selectable graphic user interface element to display the one or more notifications. As illustrated in, for example, FIG. 3, a plurality of notification preview indicators are displayed at 345 in UI 315. The preview indicators shown at 345 are referred to as such since while a visualization of the notifications 320, 325, 330, and 335 are displayed, only a portion of notifications are displayed. Referring to FIG. 4, for example, the full breadth of the notifications 320, 325, 330, and 335 are shown. The full extent of the notifications 320, 325, 330, and 335 may be displayed in response to a selection or actuation of the user-selectable graphic user interface element 340 that is provided in the UI as a mechanism to cause the display of the one or more notifications.

At operation 1510, a selection of one of the at least one preview indicators of a notification and the user-selectable graphic user interface element to display the one or more notifications is received. The selection itself is initiated by a user interacting with and/or responding to the UI displayed in operation 1505. In some embodiments, the user may interact directly with the output device that displayed the UI of operation 1505. In some instances, the output device of the computing device may also function as an input device capable of directly receiving the user's selection, as the case may be for a touchscreen display.

At operation 1515, a detailed view of the notification corresponding to the user selected preview indicator of a notification or the user-selectable graphic user interface element to display the one or more notifications is displayed. Referring to FIG. 4, UI 315 is shown in response to a selection of the user-selectable graphic user interface element 410 wherein the notifications are shown in full, including the attribute details thereof. FIG. 9 also shows a detailed view of some notifications in accordance with some aspects herein. The notifications of FIG. 9 may be displayed in response to a user selecting multiple notifications from the preview indicators corresponding to the notifications displayed in FIG. 9.

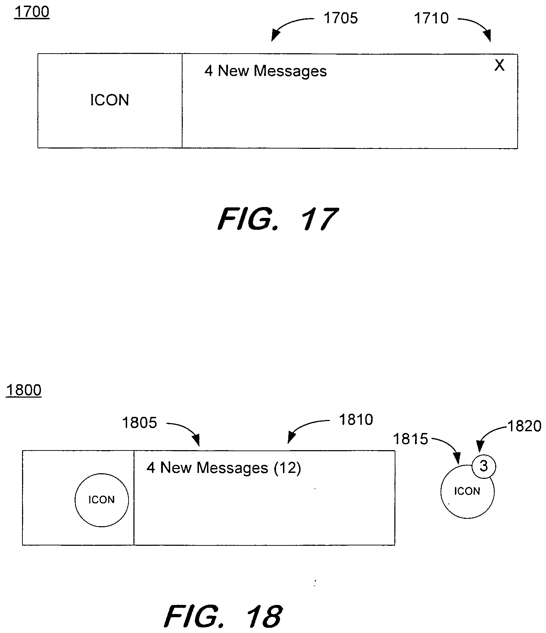

FIG. 17 is an illustrative rendering of a notification settings configuration user interface 1600. Configurations UI 1600 provides a mechanism for a user, administrator of other entity to specify the criteria and trigger events for providing a notification to a user for a plurality of applications and services relevant to a user. Such criteria and trigger events may be referred to as a subscription and may comprise, among other things, a type (such as for example reminder, alert, emergency, etc.), a delivery frequency (such as for example immediate, periodic, scheduled, etc.), a delivery type (such as for example push, pull, etc.), an importance, etc.

UI 1600 shows user-selectable settings for notifications for two (2) applications, a first application 1605 and a second application 1610. Applications 1605 and 1610 are illustrative applications and a fewer, greater, or alternative number of applications can have the notifications associated therewith configured via UI 1600 or a similar mechanism.

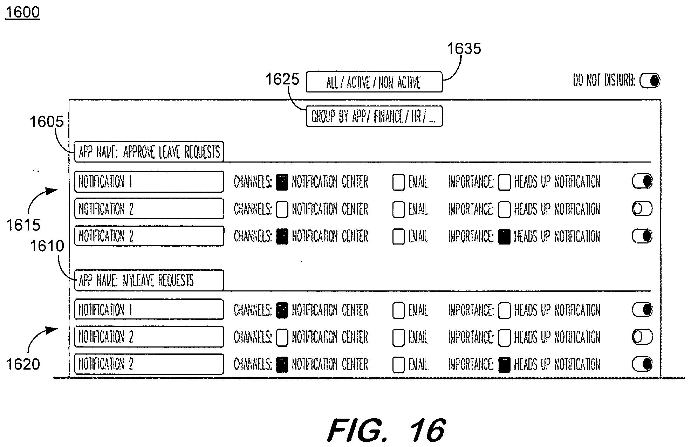

As shown, each application may have settings for one or more notifications defined via UI 1600. In the example of FIG. 16, each of the two illustrated applications 1605 and 1610 have three (3) associated notifications therewith, including the notifications 1615and 1620, respectively. In the example of FIG. 16, the particular channel for communicating each notifications can be specified, as well as a priority or level of importance for each notification. Additional, fewer, and other settings and criteria for generating a notification associated with an application may be specified in some embodiments herein. That is, UI 1600 may be extended to consider and provide mechanisms for other settings not specifically shown in FIG. 16.

FIGS. 17 and 18 are illustrative depictions of some aspects of user interfaces herein based on, *inter alia*, a state (e.g., minimized, etc.) of an application, according to some embodiments. FIG. 18 presents one configuration of a user interface 1700 including visual indications of notifications for an application in a minimized state. FIG. 18 presents another configuration of a usr interface 1800 including visual indications of notifications for a minimized application. In some aspects and for one or more reasons (e.g., privacy, security, preference, etc.), user interface 1700 of FIG. 17 may, in some embodiments, be limited to including an indicator of the number of new, unacknowledged, etc. notifications (i.e., "4 New Message(s)") as referenced at 1705 for an application. In some instances, a user interface visualization including an indication of notifications herein may also include an icon, graphic element, user interface control element, etc. via which a user may close or dismiss the visualization. Such a user interface control element is shown in FIG. 17 at 1710.

In some aspects and for one or more reasons (e.g., privacy, security, preference, etc.), FIG. 18 is a depiction of a user interface visualization 1800 that may, in some embodiments, include an indication of the number of new, unacknowledged, etc. notifications (i.e., "4 New Message(s)") as shown at 1805 and an indicator 1810 of the number of total notifications (i.e., "(12)") at 1810.

In some instances herein, a user interface including a notification visualization may include, inter alia, an icon, graphic element, etc. by which a user may invoke, activate, select, etc., inter alia, an application to further display, manage, and otherwise interact with notifications. In FIG. 18, icon 1815 may be selected or otherwise interacted with by a user to, for example, activate, invoke, select, etc. an application referenced by the icon, where the application provides or invokes functionality to display, manage, and interact with notifications, in accordance with various aspects herein. An indication of a number of notifications associated with the application referenced by icon 1815 is shown at 1820.

In some embodiments, a behavior and operation of at least some of the visual indications related to and referencing notifications may be defined, controlled, specified, etc. by a user through, for example various, preference designations.

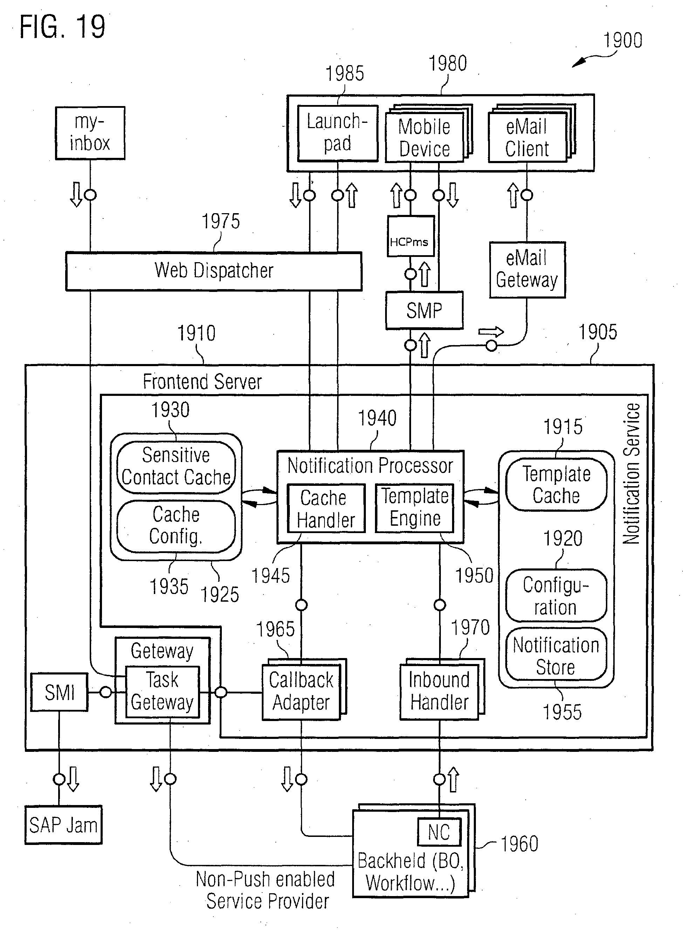

FIG. 19 is an illustrative depiction of at least a portion of a system architecture 1900 configured to support aspects of at least some embodiments of the present disclosure. As illustrated, system architecture 1900 may include, in addition to other components, devices, and (sub-) systems, a Notification Service 1905. Notification Service 1905 be provided by a Frontend Server 1910. With respect to the integrated application notification processes and user interfaces disclosed herein, Notification Service may include a number of components, processors, systems, services, and functionalities as will be described below.

Notification Service 1905 may include one or more templates, including a collection of templates (i.e., patterns, stencils, etc.) stored in template cache 1915. The templates may, in some embodiments, may be used to generate a notification message. Notification Service 1905 may also include a quantity of Configuration information 1920. The Configuration information can include, *inter alia*, an indication of available communication channels, user preferences, logging, template definitions, etc. that may be used in configuring a notification herein.

Notification Service 1905 may include one or more cache facilities as shown in system 1900 at 1925 to, for example, persist different types of information that may be relevant in executing some of the processes disclosed herein. In some embodiments, a cache facility may be provided for different classes of information (e.g., sensitive 1930, non-sensitive (not shown), etc.) and configuration information in a configuration cache 1935.

A Notification Processor 1940 may be included to process and generate notifications. Notification Processor 1940 may include, for example, a Cache Handler 1945 to provide cache access services and a Template Engine 1950 that may for example leverage, inter alia, received notification data and one or more templates to generate a notification message.

A Notification Store 1955 provides a facility where, *inter alia*, notification messages may be preserved along with, for example, lifecycle information (e.g., as new, read, snoozed, etc.), security or sensitivity indicators (e.g., an indication whether a particular content can be sent to a recipient destination using non-secure communication channels such as e-mail or mobile links), and other information.

One or more interfaces to a Backend System(s) 1960 may be provided in system 1900, including but not limited to a Callback Adapter 1965 and an Inbound Handler 1970. These and other such interfaces may facilitate communicating with different backend and other systems. For example, Inbound Handler(s) 1965 may, among other functions, receive push notification request(s) from one or more notification providers and appropriately process, preserve, etc. the request(s). In some aspects, a single Inbound Handler 1970 may support various different communication channels (e.g., e-mail, OData, etc.) or alternatively multiple Inbound Handler instances 1970 may be provided with each instance thereof supporting a specific communication channel.

System 1900 also illustrates the Frontend Server 1910 having one or more interfaces from Notification Processor 1940 via a Web Dispatcher 1970 to facilitate interactions and communication of notifications to a user at one or more devices, systems, and services 1980, including a Launchpad 1985 as detailed herein.

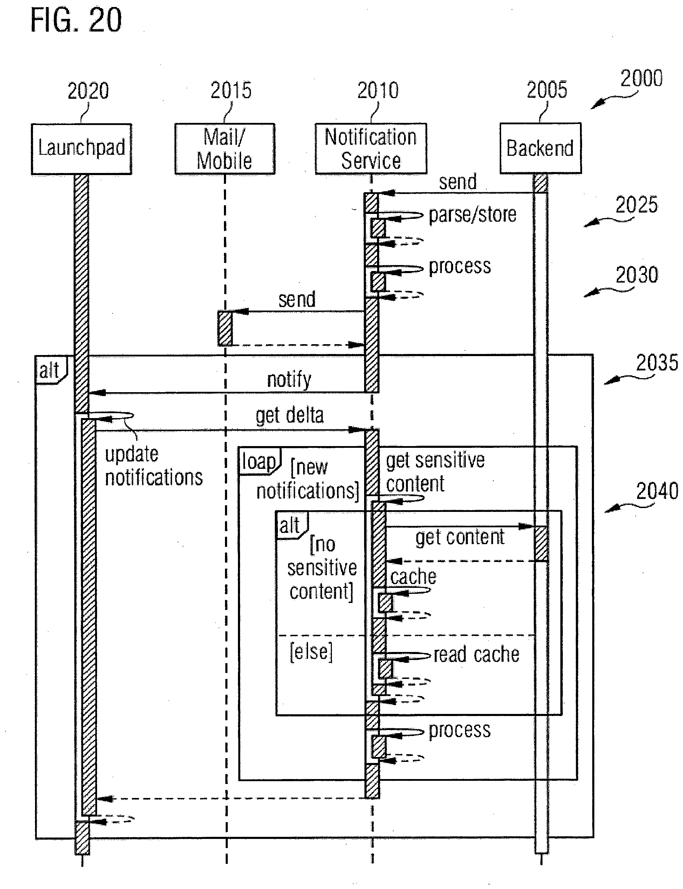

Fig. 20 is an illustrative depiction of a flow and exchange of information by a system, in accordance with some embodiments herein. In some instances, a system architecture such as system 1900 of FIG. 19 may support the flow of information shown in FIG. 20. At reference point 2025, a notification request may be received from a Backend System 2005 by an Inbound Adapter (e.g., FIG. 19, 1970), supporting for example a particular communication channel, where it may be parsed, processed, placed into an internal format, conveyed to a Notification Service 2010, etc. At reference point 2030, Notification Service 2010 may further process the notification request with, for example, any non-sensitive content and any administrative data persisted to a Notification Store (e.g., FIG. 19, 1955) and any sensitive content persisted to a Sensitive Content Cache (e.g., FIG. 19, 1930) via a Cache Handler (e.g., FIG. 19, 1945) of Notification Service 2010. Additionally, a Template Engine (e.g., FIG. 19, 1950) of Notification Service 2010 may also perform other various processing operations.

Reference point 2035 encompasses a scenario including an active frontend session with a notification user interface (e.g. SAP® Fiori) Launchpad (e.g., FIG. 19, 1980) for a user where notification(s) may be dispatched to the Launchpad and, among other things, a Template Engine (e.g., FIG. 19, 1950) of the Notification Service 2010 may be invoked to generate such notification message(s).

Continuing with the flow of information in FIG. 20, reference point 2040 includes interactions between the Notification Service 2010 and Backend System(s) 2005, as necessary. For example, a Cache Handler (e.g., FIG. 19, 1945) of Notification Service 2010 may, through a Callback Adapter (e.g., FIG. 19, 1965) for example, interact with one or more Backend Systems 2005 to obtain any (e.g., secure) content that may be requested in support of the generation (i.e., processing) of a notification message.

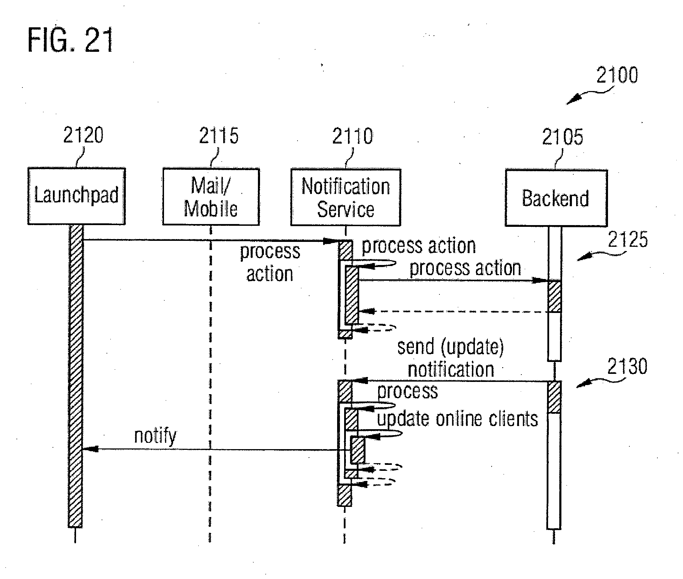

FIG. 21 is an illustrative depiction of a flow and exchange of information by a system, in accordance with some embodiments herein. In some instances, a system architecture such as system 1900 of FIG. 19 may support the flow of information shown in FIG. 21. At reference point 2125, a processing trigger may be received by a Notification Service 2110 from launchpad 2120 (in lieu of a Mail/Mobile client 2115) and, for example, a call may be delegated to an appropriate Backend System 2105 through for example a Callback Adapter (e.g., FIG. 19, 1965).

Reference point 2130 captures a flow of information after appropriate processing activities are completed by a backend system in response to the processing trigger. At 2130, an appropriate update (e.g., including a delete operation if the notification is no longer relevant) may be pushed to the Notification Service 2110 by the Backend System(s) 2105.

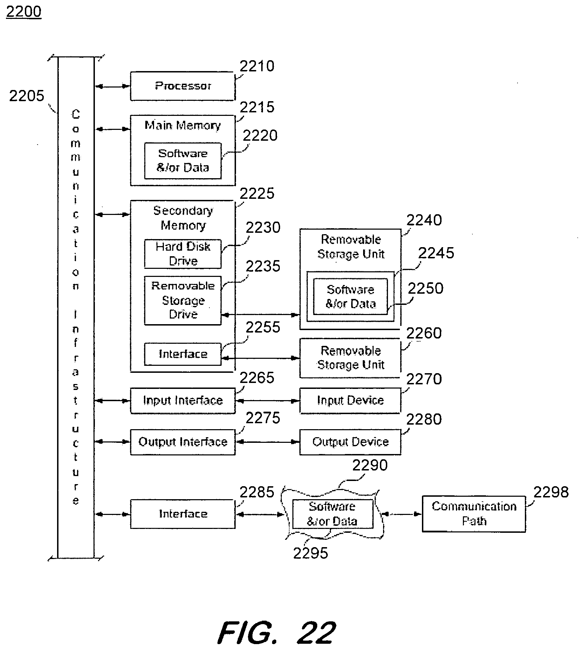

Aspects of the processes, systems, and services discussed hereinabove may be implemented through any tangible implementation of one or more of software, firmware, hardware, and combinations thereof. FIG. 22 illustrates an example computer system 2200 in which the above, or portions thereof, may be implemented as hardware, firmware, and tangible embodiments of computer-readable code. Various embodiments of the above are described in terms of example computer system 2200. After reading this description, it will become apparent to a person skilled in the relevant art(s) how to implement the embodiments described herein using other computer systems and/or computer architectures.

Computer system 2200 includes one or more processors, such as processor 2210. Processor 2210 can be a special purpose processor or a general purpose processor. Processor 2210 is connected to a communication infrastructure 2205 (for example, a bus or a network).

Computer system 2200 also includes a main memory 2215, such as Random Access Memory (RAM), containing possibly, inter alia, computer software and/or data 2220.

Computer system 2200 may also include a secondary memory 2225. Secondary memory 2225 may include, for example, a hard disk drive 2230, a removable storage drive 2235, a memory stick, etc. A removable storage drive 2235 may comprise a floppy disk drive, a magnetic tape drive, an optical disk drive, a flash memory, or the like. A removable storage drive 2235 reads from and/or writes to a removable storage unit 2240. Removable storage unit 2240 may comprise a floppy disk, magnetic tape, optical disk, etc. that is read by and written to by removable storage drive 2235. As will be appreciated by persons skilled in the relevant art(s), removable storage unit 2240 that may include a computer usable storage medium 2245 having stored therein, in some embodiments, computer software and/or data 2250.

In some implementations, secondary memory 2225 may include other similar mechanisms for allowing computer programs or other instructions to be loaded into other computer systems interfacing with system 2200. Such mechanisms may include, for example, a removable storage unit 2260 and an interface 2255. Examples of such mechanisms may include a program cartridge and cartridge interface (such as that found in video game devices), a removable memory chip (such as an Erasable Programmable Read-Only Memory (EPROM), or Programmable Read-Only Memory (PROM)) and associated socket, and other removable storage units 2260 and interfaces 2255 that allow software and data to be transferred from the removable storage unit 2260 to computer system 2200. Embodiments are therefore not limited to any specific combination of hardware and software.

Computer system 2200 may also include an input interface 2265 and a range of input devices 2270 such as, inter alia, a touchscreen, a keyboard, a mouse, etc.

Computer system 2200 may also include an output interface 2275 and a range of output devices 2280 such as, inter alia, a touchscreen, a display, one or more speakers, etc.

Computer system 2200 may also include a communications interface 2285. Communications interface 2285 may allow software and/or data 2295 to be transferred between computer system 2200 and external devices. Communications interface 2285 may include a modem, a network interface (such as an Ethernet card), a communications port, a Personal Computer Memory Card International Association (PCMCIA) slot and card, or the like. Software and/or data 2295 transferred via communications interface 2285 are in the form of signals 2290 that may be electronic, electromagnetic, optical, or other signals capable of being received by communications interface 2285. These signals 2290 may be provided to communications interface 2234 via a communications path 2298. Communications path 2298 carries signals and may be implemented using wire or cable, fiber optics, a phone line, a cellular phone link, a Radio Frequency (RF) link or other communications channels.

As used in this document, the terms "computer program medium," "computer usable medium," and "computer readable medium" generally refer to tangible media such as removable storage unit 2240, removable storage unit 2260, and a hard disk installed in hard disk drive 2230. Signals carried over communications path 2298 can also embody some of the logic described herein. Computer program medium and computer usable medium can also refer to memories, such as main memory 2215 and secondary memory 2225, which can be memory semiconductors (e.g. Dynamic Random Access Memory (DRAM) elements, etc.). These computer program products are means for providing software to computer system 2200.

Computer programs (also called computer control logic) may be stored in main memory 2215 and/or secondary memory 2225. Computer programs may also be received via communications interface 2285. Such computer programs, when executed, enable computer system 2200 to implement aspects of the disclosure as discussed herein. In particular, the computer programs, when executed, enable processor 2210 to implement the processes of aspects of the above. Accordingly, such computer programs may represent controllers of the computer system 2200. Where aspects of the instant disclosure are implemented using software, the software may be stored in a tangible computer program product and loaded into computer system 2200 using, for example, removable storage drive 2214, interface 2255, hard drive 2230 or communications interface 2285.

The present disclosure is also directed to computer program products comprising software stored on any tangible computer useable medium. Such software, when executed in one or more data processing devices, may cause data processing device(s) to operate as described herein. Embodiments of the present disclosure may employ any computer useable or readable medium, known now or in the future. Examples of computer useable mediums include, but are not limited to, primary storage devices (e.g., any type of random access memory), secondary storage devices (e.g., hard drives, floppy disks, Compact Disc Read-Only Memory (CD-ROM) disks, Zip disks, tapes, magnetic storage devices, optical storage devices, Microelectromechanical Systems (MEMS), nanotechnological storage device, etc.), and communication mediums (e.g., wired and wireless communications networks, local area networks, wide area networks, intranets, etc.).

Embodiments may operate with software, hardware, and/or operating system implementations other than those specifically described herein.

In some embodiments, aspects herein may be implemented by an application, device, or system to manage recovery of an entity or other application in a consistent manner across different devices, effectively across an entire domain.

Although embodiments have been described with respect to certain contexts, some embodiments may be associated with other types of devices, systems, and configurations, either in part or whole, without any loss of generality.

The embodiments described herein are solely for the purpose of illustration. Those in the art will recognize other embodiments which may be practiced with modifications and alterations.

## Claims

1. A method of managing notifications from a plurality of related applications, the method comprising:
displaying, by a computing device, a user interface on an output device, the user interface concurrently displaying at least one preview indicator of a notification generated by one or more related applications, each preview indicator being associated with at least one of the plurality of related applications and a user-selectable graphic user interface element to display the one or more notifications;
receiving, from a user, a selection of one of the at least one preview indicators of a notification and the user-selectable graphic user interface element to display the one or more notifications; and
displaying a detailed view of the notification corresponding to the user selected preview indicator of a notification and the user-selectable graphic user interface element to display the one or more notifications.

2. The method of claim 1, wherein the displaying of the user interface and the displaying of the detailed view of the notification are automatically resized to display requisite user interface elements based on display characteristics of the output device.

3. The method of any one of claims 1 to 2, wherein the displaying of the detailed view of the notification includes presenting a user-selectable graphic user interface element to invoke at least one action related to the selected notification.

4. The method of claim 3, wherein at least one of the plurality of applications, in response to a selection of the user-selectable graphic user interface element to invoke at least one action related to the selected notification, causes a performance of the at least one action.

5. The method of any one of claims 1 to 4, wherein the displaying of the at least one preview indicator of a notification generated by one or more related applications includes the displaying of a predetermined number of preview indicators for a latest set of notifications.

6. The method of any one of claims 1 to 5, further comprising displaying, in the user interface, an indication of a number of a new notifications received since a last displaying of the detailed view of the notifications.

7. The method of any one of claims 1 to 6, further comprising a resetting of a new notification counter in response to the receiving of the selection of one of the user selected preview indicator of a notification and the user-selectable graphic user interface element to display the one or more notifications.

8. The method of any one of claims 1 to 7, wherein a plurality of the notifications are visually displayed as a single notification, including an indication of a grouping scheme for the plurality of notifications.

9. The method of claim 8, wherein a basis for the grouping scheme is at least one of a common source for the plurality of notifications and a type of notification for the plurality of the notifications visually displayed as the single notification.

10. The method of any one of claims 8 to 9, wherein the display of the plurality of the notifications as the single notification further includes a display of a user-selectable graphic user interface element to invoke at least one action related to all of the plurality of notifications.

11. The method of claim 10, wherein at least one of the plurality of applications, in response to a selection of the user-selectable graphic user interface element to invoke at least one action related to all of the plurality of notifications, causes a performance of the at least one action.

12. The method of any one of claims 1 to 11, wherein the displaying of the detailed view of the notification includes displaying a visualization of a listing of all notifications.

13. The method of any one of claims 1 to 12, further comprising:
displaying, in the user interface on the output device, a user-selectable graphic user interface element to display a user settings area;
receiving, from a user, a selection of the user-selectable graphic user interface element to display the user settings area; and
displaying the user settings area in the user interface on the output device.

14. The method of claim 13, wherein the displayed settings area includes user interface elements to actuate notification settings for all related applications associated with a user.

15. A non-transitory computer-readable medium having processor-executable instructions stored thereon that, when executed by a processor, cause the processor to perform an action corresponding to the method according to any one of claims 1 to 14.
